# EUROPÄISCHE PATENTANMELDUNG

(11) **EP 4 838 506 A1**
(43) Veröffentlichungstag der Anmeldung: **11.11.2026**
(21) Anmeldenummer: 26176236.3
(22) Anmeldetag: 04.05.2026
(51) Int. Cl.: G08G 5/76, G01C 21/00, G01C 23/00, G01S 19/07, G08G 5/21, G08G 5/22, G08G 5/23

(54) **VERFAHREN UND VORRICHTUNG ZUM BESTIMMEN VON ATMOSPHÄRISCHEN STÖRUNGEN FÜR FAHRZEUGE SOWIE FAHRZEUG**

(30) Priorität: 09.05.2025 DE 102025117920
(71) Anmelder: Deutsches Zentrum für Luft- und Raumfahrt e.V., 53227 Bonn (DE)
(72) Erfinder: Schmölter, Erik, 53227 Bonn (DE); Berdermann, Jens, 53227 Bonn (DE); Wilken, Volker, 53227 Bonn (DE)
(74) Vertreter: Zucker, Volker

(57) **Zusammenfassung**

Die Erfindung betrifft ein Verfahren zum Bestimmen von atmosphärischen Störungen für Fahrzeuge (200), umfassend die Schritte:
- Bereitstellen einer skalaren Funktion (f_{xy}), die einen atmosphärischen Zustand in einer Umgebung mindestens eines Fahrzeugs (200) repräsentiert,
- Ermitteln mindestens eines Gradienten (G) der bereitgestellten skalaren Funktion (f_{xy}),
- Bereitstellen einer Bewegungsrichtung (h_{F}) des mindestens eines Fahrzeugs (200),
- Bestimmen eines Anteils des Gradienten (G) in der Bewegungsrichtung (h_{F}) des mindestens einen Fahrzeugs (200) als atmosphärische Störgröße (G_{F}), sowie eine Vorrichtung (100) und ein Fahrzeug (200).

## Beschreibung

Die Erfindung betrifft ein Verfahren und eine Vorrichtung zum Bestimmen von atmosphärischen Störungen für Fahrzeuge sowie ein Fahrzeug.

Die vorliegende Erfindung und die ihr zugrundeliegende Problematik werden im Hinblick auf einen Einsatz in Luftfahrzeugen erläutert, sind jedoch grundsätzlich auf andere Fahrzeuge wie z.B. Schiffe übertragbar.

**In** einem Luftfahrzeug mit einer satellitengestützten Navigation wie z.B. GNSS kann es aufgrund einer hohen Anzahl von Elektronen in der Ionosphäre zu zeitlichen Verzögerungen in einer Signalübertragung zwischen einem Satelliten und dem Luftfahrzeug kommen, was wiederum zu einer ungenauen Positionsbestimmung führen kann.

Eine Elektronendichte der Atmosphäre wird üblicherweise in Form von geographischen Karten dargestellt - ähnlich zum Stil einer Wettervorhersage. Diese Karten sind auch als TEC-Karten bekannt und z.B. unter "impc.dlr.de" abrufbar. Basierend auf den Karten kann ein Pilot sein Verhalten anpassen und sich z.B. auf eine gestörte Signalübertragung einstellen. Dies ist jedoch ungenau und unterliegt einer subjektiven Interpretation seitens des Piloten.

Es stellt sich das technische Problem, ein Verfahren, eine Vorrichtung und ein Fahrzeug bereitzustellen, die ein genaues Bestimmen von atmosphärischen Störungen ermöglichen.

Die Lösung des technischen Problems ergibt sich durch die Gegenstände mit den Merkmalen der unabhängigen Ansprüche. Weitere vorteilhafte Ausgestaltungen der Erfindung ergeben sich aus den Unteransprüchen.

Vorgeschlagen wird ein Verfahren zum Bestimmen von atmosphärischen Störungen für Fahrzeuge, umfassend die Schritte:
- Bereitstellen einer skalaren Funktion, die einen atmosphärischen Zustand in einer Umgebung mindestens eines Fahrzeugs repräsentiert,
- Ermitteln mindestens eines Gradienten der bereitgestellten skalaren Funktion,
- Bereitstellen einer Bewegungsrichtung des mindestens eines Fahrzeugs,
- Bestimmen eines Anteils des Gradienten in der Bewegungsrichtung des mindestens einen Fahrzeugs als atmosphärische Störgröße.

Weiter vorgeschlagen wird eine Vorrichtung, wobei die Vorrichtung dazu ausgebildet ist, ein Verfahren nach einer in dieser Offenbarung beschriebenen Ausführungsform auszuführen. Die Vorrichtung kann ein Server sein, der die mittels des Verfahrens bestimmte Störgröße z.B. Kunden zur Verfügung stellt. Die Vorrichtung kann zum Bereitstellen der skalaren Funktion und zum Bereitstellen der Bewegungsrichtung des Fahrzeugs jeweils eine Kommunikationseinrichtung aufweisen, die z.B. über eine API-Schnittstelle mit einem externen Server kommuniziert. Die Vorrichtung kann ferner eine Auswerteeinrichtung - z.B. einen Mikrocontroller - aufweisen. Die Auswerteeinrichtung ist insbesondere zum Ermitteln des Gradienten und/oder zum Bestimmen der Störgröße ausgebildet.

Ferner vorgeschlagen wird ein Fahrzeug, umfassend mindestens eine Vorrichtung nach einer in dieser Offenbarung beschriebenen Ausführungsform auszuführen. Das Fahrzeug ist insbesondere ein Luftfahrzeug, z.B. ein kommerzielles Großraumflugzeug, ein Privatflugzeug, eine bemannte oder unbemannte Drohne, ein Hubschrauber oder ein Luftschiff. Das Fahrzeug kann alternativ ein Straßen-, Schienen- oder Wasserfahrzeug sein. Das Fahrzeug ist z.B. ein autonom navigierendes Fahrzeug. Das Fahrzeug ist insbesondere dazu ausgebildet, satellitengestützt zu navigieren, z.B. mit Hilfe von GNSS (Global Navigation Satellite System).

Die im Rahmen dieser Offenbarung für das Verfahren angeführten technischen Effekte und Vorteile erstrecken sich auf die Vorrichtung und das Fahrzeug und umgekehrt.

Die Erfinder haben erkannt, dass ein maßgeblicher Zusammenhang zwischen dem Gradienten der skalaren Funktion und der Bewegungsrichtung des Fahrzeugs besteht. Nimmt beispielsweise die Elektronendichte in der Atmosphäre schnell in der Bewegungsrichtung des Fahrzeugs zu, so nehmen auch die zeitlichen Verzögerungen zu. Dies ist maßgeblich für Störungen in der satellitengestützten Positionsbestimmung. Je höher also eine Übereinstimmung zwischen dem Gradienten und der Bewegungsrichtung des Fahrzeugs ist, desto störender sind die erwähnten Effekte. Daher ist der Anteil des Gradienten in der Bewegungsrichtung ein geeignetes Maß zum Bestimmen der atmosphärischen Störungen.

Der atmosphärische Zustand kann z.B. eine aktuelle oder vorhergesagte Elektronendichte in der Atmosphäre, insbesondere in der Ionosphäre, sein.

Die skalare Funktion kann Werte der Elektronendichte in der Umgebung des Fahrzeugs als Funktionswerte zuordnen. Die Werte der Elektronendichte werden üblicherweise in Total Electron Content angegeben, oder kurz TEC. Die Umgebung des Fahrzeugs kann eine Region auf der Erdoberfläche oder die gesamte Erdoberfläche sein. Die Umgebung des Fahrzeugs kann z.B. durch geographische Koordinaten repräsentiert werden. Die skalare Funktion kann z.B. jedem Längen- und Breitengrad der Umgebung einen Wert der Elektronendichte zuweisen. Die skalare Funktion kann z.B. die Form: $f \left(x, y\right)$ (1) aufweisen, wobei f ein Funktionswert an der Position x, y ist. Die Position x, y kann z.B. eine geographische Koordinate sein. Die Funktion kann von einem Dienstleister bereitgestellt werden, z.B. von dem Dienstleister, der auch die eingangs erwähnten TEC-Karten bereitstellt. Die Funktion kann z.B. als CSV-Datei oder ähnliches bereitgestellt werden.

Der Gradient ist z.B. ein Vektor oder Vektorfeld, der sich aus den partiellen Ableitungen der skalaren Funktion zusammensetzt. Der Gradient kann z.B. mit Hilfe der finite Differenzenmethode ermittelt werden. Selbstverständlich kann der Gradient auch mittels anderer dem Fachmann bekannter mathematischer Methoden ermittelt werden. Der Gradient kann jeder Position x, y z.B. eine x-Vektorkomponente und eine y-Vektorkomponente zuordnen. Der Gradient kann z.B. die Form: $∇ f \left(x, y\right) = \left(\partial f/\partial x, \partial f/\partial y\right)$ (2) aufweisen, wobei ∇ der Nabla-Operator ist und ∂f/∂x und ∂f/∂y die partiellen Ableitungen des Funktionswerts der skalaren Funktion sind. Die partielle Ableitung ∂f/∂x kann z.B. in Ost-West-Richtung orientiert sein. Die partielle Ableitung ∂f/∂y kann z.B. in Nord-Süd-Richtung orientiert sein. Ein Absolutwert des Gradienten kann z.B. in TEC pro Grad (TEC/°) angegeben werden.

Die Bewegungsrichtung kann eine Orientierung des Fahrezugs auf einem Kompass sein. Die Bewegungsrichtung kann z.B. mit Hilfe eines Kompasses bereitgestellt werden. Die Bewegungsrichtung kann als ein Winkel angegeben werden. Die Bewegungsrichtung kann z.B. in Bezug auf eine oder mehrere Himmelsrichtungen bereitgestellt werden, z.B. 22,5° Nord-Nordost.

Der Anteil des Gradienten in der Bewegungsrichtung kann mit Hilfe trigonometrischer Beziehungen bestimmt werden. Die Übereinstimmung kann z.B. durch vektorielle Projektion des ermittelten Gradienten auf die Bewegungsrichtung bestimmt werden. Der Anteil kann z.B. die Form: $\left|∇f\left(x, y\right)\right| cos \left({h}_{F}-{h}_{G}\right)$ (3) aufweisen, wobei |∇f(x,y)| der Absolutwert des Gradienten, cos die trigonometrische Funktion Kosinus ist. Als Argument des Kosinus kann eine Differenz zwischen der Bewegungsrichtung h_{F} und einer Orientierung h_{G} des Gradienten Vf(x,y) in einem globalen Koordinatensystem bestimmt werden. Die Richtung h_{G} des Gradienten in dem globalen Koordinatensystem kann hierbei aus den x- und y-Komponenten des Gradienten bestimmt werden, z.B. in der Form: ${h}_{G} = arctan 2 \left(\partial f/\partial y, \partial f/\partial x\right)$ (4) wobei *arctan2* eine Erweiterung der inversen Winkelfunktion Arkustangens ist und für die partiellen Ableitungen ∂f/∂y und ∂f/∂x als Argument die Orientierung h_{G} des Gradienten in dem globalen Koordinatensystem ausgibt. Es sei erwähnt, dass eine Reihenfolge, in welcher das Argument des *arctan2* angegeben wird, d.h. ob ∂f/∂y, ∂f/∂x oder ∂f/∂x, ∂f/∂y von einer Orientierung im Koordinatensystem oder einer Umrechnung abhängig sein kann. Die Anwendung des arctan2 ist dem Fachmann bekannt.

Wenn die Bewegungsrichtung des Fahrzeugs parallel zu dem Gradienten orientiert ist, kann der Anteil maximal sein und z.B. dem Absolutwert des Gradienten entsprechen. Wenn die Bewegungsrichtung hingegen senkrecht zu dem Gradienten orientiert ist, kann der Anteil minimal sein und z.B. null entsprechen. Der bestimmte Anteil entspricht der atmosphärischen Störgröße. Die Störgröße kann insbesondere ein Zahlenwert sein, z.B. ein Betrag des Anteils. Die Störgröße kann z.B. in der Einheit TEC pro Grad (TEC/°) ausgegeben werden.

Die atmosphärische Störgröße gibt den Einfluss des atmosphärischen Zustands auf z.B. die satellitengestützte Kommunikation in der Bewegungsrichtung des Fahrzeugs an. Da die Störgröße auf die Bewegungsrichtung des Fahrzeugs bezogen ist, kann die Störgröße insbesondere als fahrzeugspezifische Störgröße bezeichnet werden.

In einer Ausführungsform wird die Störgröße als ein Zahlenwert ausgegeben. Hierdurch kann ein Pilot oder Fahrer des Fahrzeugs den Einfluss des atmosphärischen Zustands auf z.B. die satellitengestützte Kommunikation quantitativ schnell erfassen. Der Zahlenwert kann z.B. auf einem Display ausgegeben werden.

In einer Ausführungsform wird die Störgröße einem Farbwert zugeordnet, wobei die Störgröße als der zugeordnete Farbwert ausgegeben wird. Dies vereinfacht eine farbliche Interpretation der Störgröße. Beispielsweise kann die Störgröße dem Farbwert rot zugeordnet sein, wenn der zuvor erwähnte Anteil maximal ist und dem Farbwert grün zugeordnet sein, wenn der zuvor erwähnte Anteil minimal ist.

In einer Ausführungsform wird die Störgröße auf mindestens einem Bewegungsrichtungsanzeiger des mindestens einen Fahrzeugs ausgegeben. Hierdurch können die Störgröße und die Bewegungsrichtung mit einem Blick durch z.B. einen Piloten erfasst werden. Der Bewegungsrichtungsanzeiger ist z.B. ein digitaler Kurskreisel oder ein Gyrokompass. Ein Anzeigeteil des Bewegungsrichtungsanzeigers, wie z.B. eine digitale Kompassnadel, kann z.B. in dem zuvor erwähnten Farbwert eingefärbt werden. Hierdurch können die Störgröße und die Bewegungsrichtung besonders einfach durch z.B. den Piloten erfasst werden.

In einer Ausführungsform wird eine Warnung ausgegeben, wenn die Störgröße ein Schwellwertkriterium erfüllt. Hierdurch kann sichergestellt werden, dass z.B. der Pilot nur dann auf die Störgröße aufmerksam gemacht wird, wenn der Einfluss des atmosphärischen Zustands auf die satellitengestützte Kommunikation kritisch ist. Das Schwellwertkriterium kann beispielsweise erfüllt sein, wenn die Störgröße einen Schwellwert übersteigt. Der Schwellwert kann aus Versuchen vorbekannt sein und z.B. 50% des Absolutwerts des ermittelten Gradienten an einer geographischen Position entsprechen. Die Warnung kann z.B. als ein Signalton ausgegeben werden oder als eine Signalanzeige auf dem Bewegungsrichtungsanzeiger.

In einer Ausführungsform wird die Bewegungsrichtung des mindestens einen Fahrzeugs mit Hilfe von Automatic Dependent Surveillance-Broadcast (ADS-B) bereitgestellt. Hierdurch kann die Bewegungsrichtung aus unverschlüsselten Daten dezentral bereitgestellt werden. ADS-B ist ein Überwachungssignal, welches z.B. eine Position, Höhe, Geschwindigkeit und Identität des Fahrzeugs repräsentiert. Das ADS-B Signal kann über Funk übertragen werden, z.B. mit 1090 MHz oder 978 MHz. ADS-B wird z.B. auch für Trackingkarten von Flugzeugen genutzt, z.B. abrufbar unter "globe.adsbexchange.com".

In einer Ausführungsform wird die Störgröße für jedes Fahrzeug einer Mehrzahl von Fahrzeugen bestimmt, wobei die Störgröße für jedes Fahrzeug der Mehrzahl von Fahrzeugen auf einer Trackingkarte ausgegeben wird. Hierdurch können die zuvor erwähnten Trackingkarten z.B. für Flugzeuge um die fahrzeugspezifischen Störgrößen angereichert werden. Dies kann es z.B. Fluglotsen erleichtern, den Einfluss des atmosphärischen Zustands der auf der Trackingkarte angezeigten Flugzeuge leichter zu erfassen. Die Trackingkarte kann eine Region auf der Erdoberfläche oder die Erdoberfläche mit visuellen Repräsentationen (z.B. Flugzeugsymbolen) der Fahrzeuge darstellen. Die visuelle Repräsentation jedes Fahrzeugs kann z.B. in dem der Störgröße zugeordneten Farbwert eingefärbt werden.

In einer Ausführungsform wird die Störgröße entlang einer Navigationsroute des mindestens einen Fahrzeugs bestimmt. Hierdurch kann der Einfluss des atmosphärischen Zustands entlang der Navigationsroute des Fahrzeugs vorhergesagt werden. Die Navigationsroute kann z.B. als eine Abfolge von Positionen entlang einer geplanten Flugroute des Fahrzeugs ausgebildet sein. Für jede Position der Navigationsroute kann jeweils eine Störgröße bestimmt werden.

Die bereitgestellte skalare Funktion kann auch eine zeitliche Komponente umfassen und z.B. die Form: $f \left(x, y, t\right)$ (5) aufweisen, wobei t die zeitliche Komponente ist. Hierdurch kann die Störgröße für verschiedene Zeitpunkte bestimmt werden. Die skalare Funktion kann in diesem Fall auch als Vorhersagefunktion bezeichnet werden.

In Abhängigkeit der Störgröße kann eine Position des Fahrzeugs bestimmt werden. Beispielsweise kann die Störgröße den zu erwartenden zeitlichen Verzögerungen der Signalübertragung in der Bewegungsrichtung des Fahrzeugs zugeordnet werden. Hierdurch können die zu erwartenden zeitlichen Verzögerungen bei der Positionsbestimmung berücksichtigt werden.

In Abhängigkeit der Störgröße kann eine Flugroute des Fahrzeugs angepasst werden. Beispielsweise kann die Bewegungsrichtung des Fahrzeugs angepasst werden, sodass die Störgröße verkleinert oder sogar minimiert wird.

Die Erfindung wird anhand von Ausführungsbeispielen näher erläutert. Die Figuren zeigen:
- Fig. 1: eine schematische Darstellung einer Ausführungsform eines Fahrzeugs mit einer Vorrichtung,
- Fig. 2: eine schematische Darstellung einer Trackingkarte und
- Fig. 3: eine schematische Darstellung einer Navigationsroute.

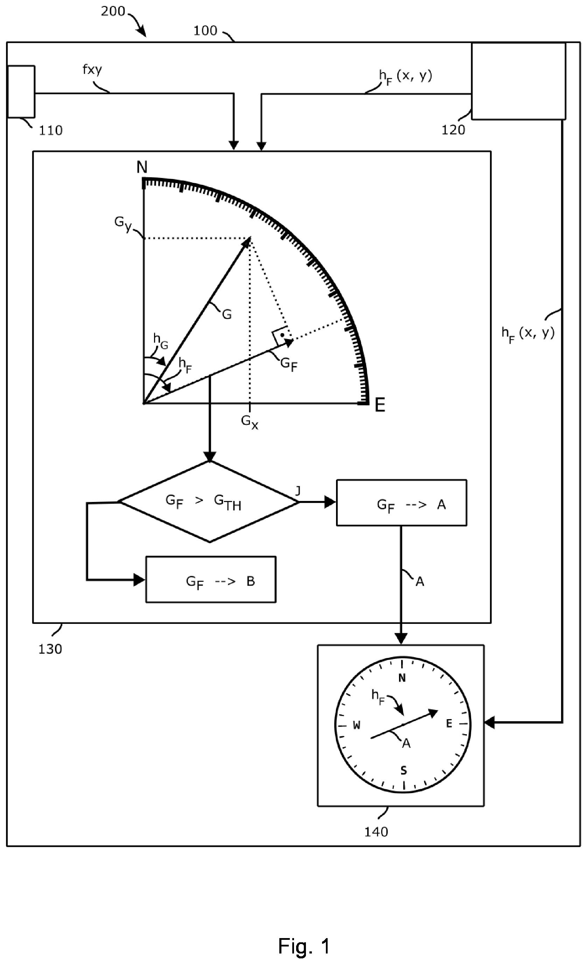

Fig. 1 zeigt eine schematische Darstellung einer Ausführungsform eines Fahrzeugs 200 mit einer Vorrichtung 100. Das Fahrzeug 200 kann z.B. ein Flugzeug sein. Die Vorrichtung 100 kann in dem Fahrzeug 200 verbaut sein und zumindest folgende Komponenten aufweisen:
- eine bodengestützte Kommunikationseinrichtung 110,
- eine satellitengestützte Navigationseinrichtung 120,
- eine Auswerteeinrichtung 130 und
- einen Bewegungsrichtungsanzeiger 140.

Bei einer satellitengestützten Navigation kann es z.B. aufgrund einer hohen Anzahl von Elektronen in der Ionosphäre zu zeitlichen Verzögerungen in einer Signalübertragung zwischen einem Satelliten und dem Fahrzeug 200 kommen. Beim Durchfliegen eines Abschnitts mit einer stark variierenden Elektronendichte in der Ionosphäre können diese atmosphärischen Störungen zu einer ungenauen Positionsbestimmung führen. Um z.B. den Piloten auf diese atmosphärischen Störungen hinzuweisen, ist die Vorrichtung 100 dazu ausgebildet, die im Folgenden erläuterten Schritte auszuführen.

Über die Kommunikationsschnittstelle 110 kann die Vorrichtung 100 während eines Flugs eine skalare Funktion f_{xy} von einem externen Dienstleister empfangen. Die Kommunikationsschnittstelle 110 kann z.B. ein Funkgerät sein.

Die skalare Funktion f_{xy} repräsentiert einen atmosphärischen Zustand in einer Umgebung des Fahrzeugs 200. Die Umgebung des Fahrzeugs 200 kann eine Region auf der Erdoberfläche sein. Die Umgebung des Fahrzeugs 200 kann in mehrere geographische Positionen x, y gerastert sein. Die Positionen x, y können z.B. in geographischen Koordinaten durch Längen- und Breitgrade angegeben werden. Die skalare Funktion f_{xy} kann den Positionen x, y Werte der Elektronendichte zuordnen. Die Elektronendichte wird üblicherweise in Total Electron Count (TEC) angegeben.

Die zuvor empfangene skalare Funktion f_{xy} wird daraufhin der Auswerteeinrichtung 130 bereitgestellt und ein Gradient G der bereitgestellten skalaren Funktion f_{xy} wird ermittelt. Die Auswerteeinrichtung 130 kann z.B. ein Mikrocontroller sein.

Der Gradient G kann z.B. mit Hilfe der finiten Differenzenmethode aus der skalaren Funktion f_{xy} ermittelt werden. Der Gradient G kann iterativ für die aktuelle geographische Position x, y des Fahrzeugs 200 oder für alle geographischen Positionen x, y in der Umgebung des Fahrzeugs 200 ermittelt werden.

In Fig. 1 ist ein Nord-Ost-Quadrant einer Kompassrose dargestellt, welche den für die aktuelle Position x, y ermittelten Gradienten G zeigt. Der Gradient G ist ein Vektor, der eine Orientierung h_{G} und eine Stärke der steilsten Zunahme der skalaren Funktion f_{xy} für die Position x, y angibt. In einer Ost-West-Richtung kann der Gradient G z.B. die Komponente Gₓ aufweisen und in einer Nord-Süd-Richtung kann der Gradient G z.B. die Komponente G_{y} aufweisen. Dies entspricht den partiellen Ableitungen der skalaren Funktion f_{xy} an der Position x, y. Ein Betrag des Gradienten G kann z.B. in TEC pro Grad (TEC/°) angegeben werden.

Über die Navigationseinrichtung 120 kann eine Bewegungsrichtung h_{F} des Fahrzeugs 200, z.B. eine Flugrichtung, an einer aktuellen Position x, y des Fahrzeugs 200 bereitgestellt werden. Die Navigationseinrichtung 120 kann z.B. ein Kompass sein. Die beispielhaft in Fig. 1 gezeigte Bewegungsrichtung h_{F} des Fahrzeugs 200 entspricht in etwa 78° Ostnordost.

Mit Hilfe der Auswerteeinrichtung 130 wird daraufhin ein Anteil des Gradienten G in der Bewegungsrichtung h_{F} des Fahrzeugs 200 als atmosphärische Störgröße G_{F} bestimmt. Zum Bestimmen der Störgröße G_{F} kann z.B. der Gradient G vektoriell auf die Bewegungsrichtung h_{F} projiziert werden. Die atmosphärische Störgröße G_{F} kann z.B. ein Betrag dieser vektoriellen Projektion sein. Die Störgröße G_{F} gibt den Einfluss des Gradienten G auf z.B. die satellitengestützte Kommunikation in der Bewegungsrichtung h_{F} des Fahrzeugs 200 an. Je höher der Anteil des Gradienten G in der Bewegungsrichtung h_{F} ist, desto störender sind die eingangs erwähnten zeitlichen Verzögerungen in der Signalübertragung.

Die Störgröße G_{F} kann z.B. auf einem Display (nicht dargestellt) als Zahlenwert ausgegeben werden, um den Piloten auf die Störgröße G_{F} hinzuweisen.

Insbesondere kann eine Warnung ausgegeben werden, wenn die Störgröße G_{F} ein Schwellwertkriterium erfüllt. Beispielsweise kann die Störgröße G_{F} mit einem Schwellwert G_{TH} verglichen werden. Wenn die Störgröße G_{F} den Schwellwert G_{TH} übersteigt (in Fig. 1 durch ein J für "Ja" gekennzeichnet), kann das Schwellwertkriterium erfüllt sein. In diesem Fall kann die Störgröße G_{F} einem Farbwert A wie z.B. rot zugeordnet werden.

Die Störgröße G_{F} kann auf dem z.B. als Gyrokompass ausgebildeten Bewegungsrichtungsanzeiger 140 ausgegeben werden. Beispielsweise kann hierzu eine Kompassnadel des Bewegungsrichtungsanzeigers 140, welche die aktuelle Bewegungsrichtung h_{F} des Fahrzeugs 200 anzeigt, in dem zugeordneten Farbwert A eingefärbt werden, um den Piloten vor etwaigen Problemen bei der Positionsbestimmung in der Bewegungsrichtung h_{F} visuell zu warnen.

Erfüllt die Störgröße G_{F} das Schwellwertkriterium hingegen nicht, kann die Störgröße G_{F} einem Farbwert B wie z.B. grün zugeordnet werden. Die Kompassnadel des Bewegungsrichtungsanzeigers 140 kann in diesem Fall z.B. in grün eingefärbt werden (nicht dargestellt), um den Piloten visuell auf eine unproblematische Positionsbestimmung in der Bewegungsrichtung h_{F} hinzuweisen.

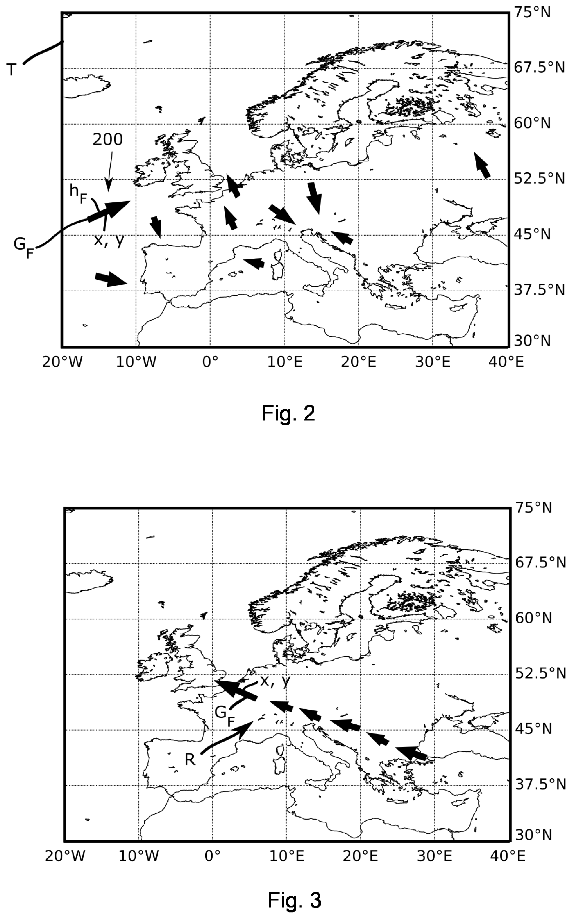

Fig. 2 zeigt eine schematische Darstellung einer Trackingkarte T. Die Trackingkarte T kann z.B. zum Einsatz kommen, um Positionen x, y und Bewegungsrichtungen h_{F} einer Mehrzahl von z.B. als Flugzeugen ausgebildeten Fahrzeugen 200 in einem Luftraum zu überwachen (in Fig. 2 wird beispielhaft der Luftraum über Europa dargestellt).

Die Trackingkarte T kann mit Hilfe einer weiteren Ausführungsform der zuvor erläuterten Vorrichtung 100 erstellt werden. Die Vorrichtung 100 kann in dieser weiteren Ausführungsform z.B. ein stationärer Server sein (nicht dargestellt).

Nachteilig an bereits bekannten Darstellungen von Trackingkarten ist, dass einem Betrachter nicht vermittelt wird, ob atmosphärische Störungen eine Positionsbestimmung der zu überwachenden Fahrzeuge 200 beeinträchtigen können. Die in Fig. 2 gezeigte Trackingkarte T beseitigt diesen Nachteil, indem die Fahrzeuge 200 durch Pfeile visuell repräsentiert werden, wobei eine Länge der Pfeile (Fig. 2) oder ein Farbwert (vgl. Fig. 1) der Pfeile die Störgröße G_{F} eines jeden Fahrzeugs 200 angibt. Anstatt der Pfeile können selbstverständlich z.B. kleine Flugzeugsymbole als visuelle Repräsentation der Fahrzeuge 200 verwendet werden. Zur besseren Übersicht ist nicht jedes Fahrzeug 200 (bzw. jeder Pfeil) mit Bezugszeichen versehen.

Die skalare Funktion f_{xy} kann z.B. von einem Dienstleister in Form einer CSV-Datei bereitgestellt werden und z.B. Werte der Elektronendichte (TEC) geographischen Positionen x, y in dem gezeigten geographischen Bereich zuordnen.

Die Bewegungsrichtungen h_{F} der Fahrzeuge 200 kann mit Hilfe von Automatic Dependent Surveillance-Broadcast bereitgestellt werden. Hierdurch können die Bewegungsrichtungen h_{F} der Fahrzeuge 200 besonders einfach ermittelt und bereitgestellt werden.

Ein Gradient G der skalaren Funktion f_{xy} kann analog zu den Erläuterungen zu Fig. 1 ermittelt werden. Aus dem Gradienten G und den Bewegungsrichtungen h_{F} kann wiederum für jedes Fahrzeugs 200 eine Störgröße G_{F} an der jeweils aktuellen Position x, y bestimmt werden, sodass die in Fig. 2 gezeigte Trackingkarte T erstellt wird. Auf der Trackingkarte T werden somit nicht nur die Positionen x, y und Bewegungsrichtungen h_{F} der jeweiligen Fahrzeuge 200 ausgegeben, sondern es wird auch für jedes Fahrzeug 200 die bestimmte atmosphärische Störgröße G_{F} ausgegeben.

Fig. 3 zeigt eine schematische Darstellung einer Navigationsroute R. Die Navigationsroute R kann z.B. zum Einsatz kommen, um Störgrößen G_{F} für mehrere Positionen x, y und Bewegungsrichtung h_{F} eines z.B. als Flugzeug ausgebildeten Fahrzeugs 200 entlang einer geplanten Flugroute vorherzusagen. In Fig. 3 wird beispielhaft eine Flugroute von Istanbul nach London dargestellt.

Nachteilig an bereits bekannten Darstellungen von Navigationsrouten ist, dass einem Betrachter nicht vermittelt wird, ob atmosphärische Störungen eine Positionsbestimmung entlang einer Flugroute beeinträchtigen können. Die in Fig. 3 gezeigte Navigationsroute R beseitigt diesen Nachteil, indem die atmosphärischen Störgrößen G_{F} für z.B. sechs Positionen x, y vor dem Abflug bestimmt werden. Ein Zahlenwert der jeweiligen Störgröße G_{F} an einer Position x, y kann z.B. durch eine Pfeillänge repräsentiert werden. Je länger der Pfeil an der Position x,y ist, desto größer ist z.B. die Störgröße G_{F}. Zur besseren Übersicht ist nicht jede Position x, y (bzw. jeder Pfeil) mit Bezugszeichen versehen.

### Bezugszeichenliste

- A, B: Farbwert
- E: Osten
- G: Gradient
- G_{F}: Störgröße
- G_{TH}: Schwellwert
- G_{X}: Ost-West-Komponente
- Gy: Nord-Süd-Komponente
- h_{F}: Bewegungsrichtung
- h_{G}: Orientierung
- J: Ja
- N: Norden
- R: Navigationsroute
- S: Süden
- T: Trackingkarte
- W: Westen
- x, y: geographische Position

- 100: Vorrichtung
- 110: Kommunikationseinrichtung
- 120: Navigationseinrichtung
- 130: Auswerteeinrichtung
- 140: Bewegungsrichtungsanzeiger
- 200: Fahrzeug

## Patentansprüche

1. Verfahren zum Bestimmen von atmosphärischen Störungen für Fahrzeuge (200), umfassend die Schritte:
- Bereitstellen einer skalaren Funktion (f_{xy}), die einen atmosphärischen Zustand in einer Umgebung mindestens eines Fahrzeugs (200) repräsentiert,
- Ermitteln mindestens eines Gradienten (G) der bereitgestellten skalaren Funktion (f_{xy}),
- Bereitstellen einer Bewegungsrichtung (h_{F}) des mindestens eines Fahrzeugs (200),
- Bestimmen eines Anteils des Gradienten (G) in der Bewegungsrichtung (h_{F}) des mindestens einen Fahrzeugs (200) als atmosphärische Störgröße (G_{F}).

2. Verfahren nach Anspruch 1, **dadurch gekennzeichnet, dass** die Störgröße (G_{F}) als ein Zahlenwert ausgegeben wird.

3. Verfahren nach einem der vorangegangenen Ansprüche, **dadurch gekennzeichnet, dass** die Störgröße (G_{F}) einem Farbwert (A, B) zugeordnet wird, wobei die Störgröße (G_{F}) als der zugeordnete Farbwert (A, B) ausgegeben wird.

4. Verfahren nach einem der vorangegangenen Ansprüche, **dadurch gekennzeichnet, dass** die Störgröße (G_{F}) auf mindestens einem Bewegungsrichtungsanzeiger (140) des mindestens einen Fahrzeugs (200) ausgegeben wird.

5. Verfahren nach einem der vorangegangenen Ansprüche, **dadurch gekennzeichnet, dass** eine Warnung ausgegeben wird, wenn die Störgröße (G_{F}) ein Schwellwertkriterium erfüllt.

6. Verfahren nach einem der vorangegangenen Ansprüche, **dadurch gekennzeichnet, dass** die Bewegungsrichtung (h_{F}) des mindestens einen Fahrzeugs (200) mit Hilfe von Automatic Dependent Surveillance-Broadcast bereitgestellt wird.

7. Verfahren nach einem der vorangegangenen Ansprüche, **dadurch gekennzeichnet, dass** die Störgröße (G_{F}) für jedes Fahrzeug (200) einer Mehrzahl von Fahrzeugen (200) bestimmt wird, wobei die Störgröße (G_{F}) für jedes Fahrzeug (200) der Mehrzahl von Fahrzeugen (200) auf einer Trackingkarte (T) ausgegeben wird.

8. Verfahren nach einem der vorangegangenen Ansprüche, **dadurch gekennzeichnet, dass** die Störgröße (G_{F}) entlang einer Navigationsroute (R) des mindestens einen Fahrzeugs (200) bestimmt wird.

9. Vorrichtung (100) zum Bestimmen von atmosphärischen Störungen, wobei die Vorrichtung (100) dazu ausgebildet ist, ein Verfahren nach einem der Ansprüche 1 bis 8 auszuführen.

10. Fahrzeug (200), umfassend mindestens eine Vorrichtung (100).
